# EUROPÄISCHE PATENTANMELDUNG

(11) **EP 3 018 958 A1**
(43) Veröffentlichungstag der Anmeldung: **11.05.2016**
(21) Anmeldenummer: 14191638.7
(22) Anmeldetag: 04.11.2014
(51) Int. Cl.: H04W 72/12, H04W 92/02, H04W 92/04

(54) **Netzwerkanordnung und Verfahren zur Priorisierung von Echtzeittelegrammen in einem konvergenten Netzwerk**

(71) Anmelder: Siemens Aktiengesellschaft, 80333 München (DE)
(72) Erfinder: Götz, Franz-Josef, 91180 Heideck (DE); Klotz, Dieter, 90768 Fürth (DE)

(57) **Zusammenfassung**

Die Erfindung betrifft ein Verfahren zur Priorisierung von Echtzeittelegrammen in einem konvergenten Netzwerk (1), insbesondere in einem industriellen Netzwerk und / oder einem "Time-Sensitive Network" (TSN), wobei das konvergente Netzwerk (1) mindestens eine zentrale Verteilerinfrastruktur (2) und mindestens eine dezentrale Verteilerinfrastruktur (12) aufweist und wobei im konvergenten Netzwerk (1) mindestens ein Dienst Echtzeittelegramme sendet und/oder empfängt, und wobei das konvergente Netzwerk (1) mindestens einen Koppelknoten (10) aufweist, der ein zentraler Netzwerkknoten (8) zur Verbindung von zentraler Verteilerinfrastruktur (2) und dezentraler Verteilerinfrastruktur (12) ist, und der mindestens einen Koppelport (11) aufweist, über den der Koppelknoten (10) mit der dezentralen Verteilerinfrastruktur (12) verbunden wird, wobei der Koppelknoten (10) zentrale Netzwerkports (6) aufweist, über die der Koppelknoten (10) in die zentrale Verteilerinfrastruktur (2) eingebunden ist. Für eine effiziente Priorisierung der Echtzeittelegramme wird vorgeschlagen, dass den Echtzeittelegrammen, die an zentralen Netzwerkports (6) der Koppelknoten (10) empfangen werden, ein höheres Prioritätsniveau (30) zugewiesen wird als den Echtzeittelegrammen die an den Koppelports (11) empfangen werden.

## Beschreibung

Die Erfindung betrifft ein Verfahren zur Priorisierung von Echtzeittelegrammen in einem konvergenten Netzwerk, insbesondere in einem industriellen Netzwerk, wobei das konvergente Netzwerk mindestens eine zentrale Verteilerinfrastruktur und mindestens eine dezentrale Verteilerinfrastruktur aufweist und wobei im konvergenten Netzwerk mindestens ein Dienst Echtzeittelegramme sendet und/oder empfängt, und wobei das konvergente Netzwerk mindestens einen Koppelknoten aufweist, der ein zentraler Netzwerkknoten zur Verbindung von zentraler Verteilerinfrastruktur und dezentraler Verteilerinfrastruktur ist, und der mindestens einen Koppelport aufweist, über den der Koppelknoten mit der dezentralen Verteilerinfrastruktur verbunden wird, wobei der Koppelknoten zentrale Netzwerkports aufweist, über die der Koppelknoten in die zentrale Verteilerinfrastruktur eingebunden ist.

Die Erfindung betrifft ferner eine Netzwerkanordnung sowie ein Netzwerkgerät, zur Durchführung eines derartigen Verfahrens.

Ein derartiges Verfahren kann in vielen Industriebereichen, insbesondere in der Automatisierungs- und Automobilindustrie sowie im Energiebereich, zum Einsatz kommen. Dort besteht die Anforderung an Kommunikationsnetzwerke, anlagenweit auf Basis eines einzigen standardisierten Protokolls für alle Kommunikationsdienste, von der Feldbus-Ebene bis hin zur Geschäfts-Ebene, geeignet zu sein. Ein derartiges Kommunikationsnetzwerk wird auch als konvergentes Netzwerk bezeichnet, in welchen verschiedene Dienste und Echtzeitdienste realisierbar sind. Solche Netzwerke werden auch als konvergentes "Time-Sensitive Network" (TSN) bezeichnet. Beispielhaft ist hier für den industriellen Bereich die Kommunikation auf Basis des Ethernet-Protokolls zu nennen.

Eine zentrale Verteilerinfrastruktur, auch Backbone genannt, ist der zentrale Teil des konvergenten Netzwerks. Über diese zentrale Verteilerinfrastruktur wird ein Großteil der Daten an die entsprechenden dezentralen Verteilerinfrastrukturen verteilt. Der Backbone kann dabei auch aus mehreren, unabhängigen oder miteinander verbundenen zentralen Verteilerinfrastrukturen bestehen. Die Leistungsfähigkeit der zentralen Verteilerinfrastruktur (des Backbones) ist in der Regel deutlich höher als die von dezentralen Verteilerinfrastrukturen. Zusätzlich können in der zentralen Verteilerinfrastruktur entsprechende Redundanzen vorgesehen sein.

Aus der Koexistenz verschiedener Dienste ergeben sich einige Herausforderungen. Zu diesen Diensten zählen der zyklische Datenverkehr, wie die kontinuierliche Übertragung von Steuerungsdaten (auch Control-Data-Streams oder CD-Streams) und Audio-Video-Streams (auch AV-Streams) sowie der azyklischen Datenverkehr, wie der sogenannte Best-Effort-Traffic (BE-Traffic), der mit der aktuell für diesen Dienst bestmöglichen Geschwindigkeit übertragen werden soll.

Trotz der Koexistenz mehrerer Dienste im selben Netzwerk müssen für Echtzeitdienste, z. B. für Industriesteuerungen und deren Echtzeittelegramme, für jeden Pfad zwischen Steuergerät und Endgerät, vorgegebene Anforderungen wie minimale Verzögerungszeiten (Low-Latency), minimaler Abweichungen vom Arbeitstakt und minimale Abweichungen bei der Laufzeit von Datenpaketen (Low-Jitter) erfüllt werden und darüber hinaus genügend Bandbreite sowie ausreichende Ressourcen zur Verfügung stehen. Anforderungen wie diese werden im Allgemeinen unter "Quality of Service" (QoS) zusammengefasst. Diese Anforderungen müssen auch dann noch erfüllt werden, wenn mehrere Echtzeitdienste auf eine gemeinsame zentrale Verteilerinfrastruktur zugreifen.

Bisher verhindern Ingress-Policing an den Eingangs-Ports und Egress-Policing an den Ausgangs-Ports durch bekannte Mechanismen wie Leaky-Bucket, dass zyklische Datenströme, z. B. CD-Streams oder AV-Streams, mehr als die für sie reservierte Bandbreite verbrauchen. Hat beispielsweise ein Datenstrom seine reservierte Bandbreite verbraucht, so werden dessen Telegramme für einen bestimmten Zeitraum gelöscht. So wird bisher die größere Datenlast an einem Koppelknoten im Vergleich zu den Koppelports an den zentralen Netzwerkports (auch Backbone-Ports) berücksichtigt. Koppelknoten sind die Netzwerkknoten oder -verteiler, die die zentrale Verteilerinfrastruktur mit den dezentralen Verteilerinfrastrukturen verbinden, Koppelports sind die Ports, an denen eine dezentrale Verteilerinfrastruktur an den Koppelknoten angebunden ist.

Bisher wird bei den bekannten Policing Mechanismen (z. B. Leaky-Bucket) für die Echtzeitdienste an den zentralen Netzwerkports mehr Bandbreite reserviert als für die Echtzeitdienste an den Koppelports. Wenn die jeweils reservierte Bandbreite nicht verbraucht wird, existieren unnötige Reserven was unwirtschaftlich sein kann. Wenn jedoch die reservierte Bandbreite verbraucht wird, werden Echtzeittelegramme dieses Dienstes für einen Zeitraum gelöscht und eine garantierte und zeitlich korrekte Zustellung von Telegrammen, kann nicht mehr sichergestellt werden. Auch die "Quality of Service" Anforderungen können so nicht erfüllt werden.

Der Erfindung liegt die Aufgabe zugrunde, ein Verfahren der eingangs genannten Art sowie eine Netzwerkanordnung und einen Netzwerkteilnehmer zur Verfügung zu stellen, mit welchen Echtzeittelegramme effizient priorisiert werden können.

Diese Aufgabe wird bei einem Verfahren der eingangs genannten Art dadurch gelöst, dass den Echtzeittelegrammen, die an zentralen Netzwerkports der Koppelknoten empfangen werden, ein höheres Prioritätslevel zugewiesen wird als den Echtzeittelegrammen die an den Koppelports empfangen werden.

Der Erfindung liegt die Erkenntnis zu Grunde, dass eine portspezifische Priorisierung unter Berücksichtigung der unterschiedlichen Datenlast an den Ports eines Koppelknotens bei Echtzeitdiensten, wie z. B. beim Control-Data-Traffic (CD-Traffic), die Übertragung deutlich verbessert. Dies hat minimierte Verzögerungszeiten, einen kleineren Jitter, mehr Bandbreite und einen geringeren Ressourcenbedarf in den Netzwerkknoten einer zentralen Netzwerkverbindung zur Folge.

Damit werden die Echtzeittelegramme rechtzeitig und vorhersehbar zum Empfänger übermittelt und gleichzeitig wird die verfügbare Bandbreite für weitere Dienste maximiert und "Quality of Service" kann garantiert werden. Dabei spielt es keine Rolle ob diese Telegramme über eine dezentrale Verteilerinfrastruktur mit niedrigem Datenaufkommen oder über eine zentrale Verteilerinfrastruktur mit höherem Datenaufkommen übertragen werden. Vorteilhaft ist ebenfalls, dass den Echtzeittelegrammen im Backbone eine höhere Bedeutung zukommt, und diese den Backbone somit schneller passieren können.

In einer weiteren vorteilhaften Ausführungsform wird den Echtzeittelegrammen, die an den Koppelports empfangen werden, ein niedrigeres Prioritätsniveau zugewiesen, als den Echtzeittelegrammen, die an den zentralen Netzwerkports der Koppelknoten empfangen werden. Dadurch wird stärker berücksichtigt, dass in den meisten Fällen der Datendurchsatz in der zentralen Verteilerinfrastruktur deutlich höher ist, als der Datendurchsatz in den dezentralen Teilen des Netzwerks. Es wird ebenfalls vermieden, dass Echtzeittelegramme, die bereits in der zentralen Verteilerinfrastruktur weitergeleitet wurden, durch ein zufällig in diesem Koppelknoten hinzukommendes neues Echtzeittelegramm mit demselben Prioritätsniveau ausgebremst werden. So wird darüber hinaus sichergestellt, dass den Echtzeittelegrammen keine unnötig hohe Priorität zugeteilt wird und es somit zu Ressourcenengpässen in der zentralen Verteilerinfrastruktur käme.

In einer weiteren vorteilhaften Ausführung wird den Echtzeittelegrammen an weiteren zentralen Netzwerkport das jeweils nächsthöhere Prioritätsniveau zugewiesen. Dies hat den besonderen Vorteil, dass Echtzeittelegramme, die besonders lange Pfade in der zentralen Verteilerinfrastruktur zurücklegen müssen, mit steigender Priorität weitergeleitet werden. Haben die Echtzeittelegramme das höchste Prioritätsniveau erreicht, so können diese nicht mehr höher priorisiert werden. Welche Ports diese zusätzliche Priorisierung durchführen, hängt von verschiedenen Faktoren ab. Die physikalische Struktur der zentralen Verteilerinfrastruktur hat insofern darauf Einfluss, als beispielsweise für zentrale Netzwerkports die eine Engstelle oder eine Verbindung eines langen Netzwerkpfads darstellen, schon im Vorfeld oder bei erkennen eines Problems entsprechende Maßnahmen ergriffen werden können. Eine Priorisierung vor diesen kritischen Ports oder sogar eine Priorisierung durch diese kritischen Ports ist hier denkbar.

In einer weiteren vorteilhaften Ausführungsform wird das Prioritätsniveau der Echtzeittelegramme dynamisch vergeben. So kann, abhängig davon welche Instanz die Dynamik vorgibt, entsprechend schnell auf veränderte Randbedingungen reagiert werden. Eine Erhöhung der Produktionskapazität beispielsweise, kann auch mit einer Erweiterung des Netzwerks und einer erhöhten Anzahl von Teilnehmern die Echtzeittelegramme senden und/oder empfangen einhergehen. Eine oder mehrere Instanzen in der Netzwerkanordnung sollten also in der Lage sein, die zu vergebenden Prioritäten anzupassen. Beispielsweise kann ein zentraler Netzwerkverteiler in der zentralen Verteilerinfrastruktur diese Aufgabe übernehmen und die jeweils gültigen Prioritätslevels an alle anderen Geräte synchronisieren.

Weiterhin denkbar ist, dass die Prioritätsniveaus dieser Netzwerkanordnung aus einem cyber-physischen System stammen. Damit wird eine Industrie 4.0 konforme Produktion ermöglicht, in der nicht nur die Produktion vernetzt ist, sondern auch das Engineering und sogar das Sourcing verknüpft sind. Damit werden beispielsweise Kleinserien effizienter produzierbar.

Ein weiteres Kriterium für die Zuordnung der Prioritätsniveaus der Echtzeittelegramme kann die aktuelle Netzwerkauslastung sein. Das Prioritätsniveau lastabhängig zu vergeben hat den Vorteil, dass direkt auf tägliche Auslastungsschwankungen im konvergenten Netzwerk reagiert werden kann. Zu diesen Auslastungsschwankungen zählen unter anderem der Schichtbeginn in der Produktion oder das erstmalige Übertragen der Produktionsdaten inklusive Testen der Anlagen bei Anlauf einer neuen Serienproduktion.

Besonders vorteilhaft ist es, wenn die Priorisierung der Echtzeittelegramme durch den jeweils empfangenden Netzwerkport erfolgt. So ist sichergestellt, dass die Priorisierung der Echtzeittelegramme immer direkt und ohne weitere Verzögerung stattfindet. Dies spart Ressourcen und verkürzt die Übertragungszeit.

Weiterhin wird die Aufgabe auch durch eine Netzwerkanordnung zur Durchführung des Verfahrens gelöst, wobei die Netzwerkanordnung mindestens eine zentrale Verteilerinfrastruktur mit mindestens einem Koppelknoten und mindestens eine dezentrale Verteilerinfrastruktur aufweist. Die Anzahl der dezentralen Verteilerinfrastrukturen kann dabei von der Leistungsfähigkeit oder schlicht der Größe der zentralen Verteilerinfrastruktur abhängen und ist zusätzlich abhängig von der jeweiligen Anwendung.

Besonders vorteilhaft ist es wenn die zentrale Verteilerinfrastruktur eine Ringstruktur aufweist. Hier ist ohne eine Redundanz der einzelnen zentralen Netzwerkverbindungen bereits eine Redundanz bei Ausfall einer Netzwerkverbindung integriert. Das Echtzeittelegramm kann immer den kürzesten Weg wählen und bei Ausfall einer zentralen Netzwerkverbindung den entsprechenden, möglichen Pfad über die noch intakten Netzwerkverbindungen wählen. Hier ergänzen sich das erfindungsgemäße Verfahren und die Netzwerkstruktur ideal.

In einer weiteren Ausführungsform weist die zentrale Verteilerinfrastruktur im Wesentlichen eine kammartige Struktur auf. In dieser Struktur ist das erfindungsgemäße Verfahren besonders vorteilhaft, da die zentrale Verteilerinfrastruktur feldbusartig aufgebaut ist, und somit eine effiziente Priorisierung der Echtzeittelegramme nach dem erfindungsgemäßen Verfahren von hoher Bedeutung ist.

Besonders vorteilhaft ist eine Ausführungsform in der die Netzwerkanordnung Teil eines industriellen Automatisierungssystems oder daran koppelbar ist. In dieser Umgebung sind Echtzeitdienste oft mit sicherheitskritischen Funktionen verbunden. Es ist also gerade im industriellen Umfeld von höchster Bedeutung die Vorteile des erfindungsgemäßen Verfahrens, wie die Maximierung der Bandbreite für weitere Dienste und garantiertem "Quality of Service", umzusetzen.

Netzwerkgeräte, die zur Durchführung des Verfahrens geeignet sind, haben den großen Vorteil, dass über das ganze konvergente Netzwerk hinweg sichergestellt werden kann, dass die Echtzeittelegramme mit der nötigen Priorität beziehungsweise der in der zentralen Verteilerinfrastruktur erhöhten Priorität übertragen werden. Beispielsweise sind hier gemanagte Switches oder Hubs zu nennen, die selbst oder deren Ports eine erfindungsgemäße Priorisierung vornehmen können. Auch Router, Netzwerkadapter im Sinne einer Netzwerkerweiterung eines sonst nicht netzwerkfähigen Geräts oder weitere Netzwerkverteiler können hier zum Einsatz kommen.

Im Folgenden wird die Erfindung anhand der in den Figuren dargestellten Ausführungsbeispiele näher beschrieben und erläutert. Es zeigen:
- FIG 1: eine konvergente Netzwerkanordnung mit zentraler Verteilerinfrastruktur in Ringstruktur,
- FIG 2: eine konvergente Netzwerkanordnung mit zentraler Verteilerinfrastruktur in Kammstruktur und
- FIG 3: zwei beispielhafte Arbeitstakte mit verschiedenen Diensten und Prioritätsniveaus.

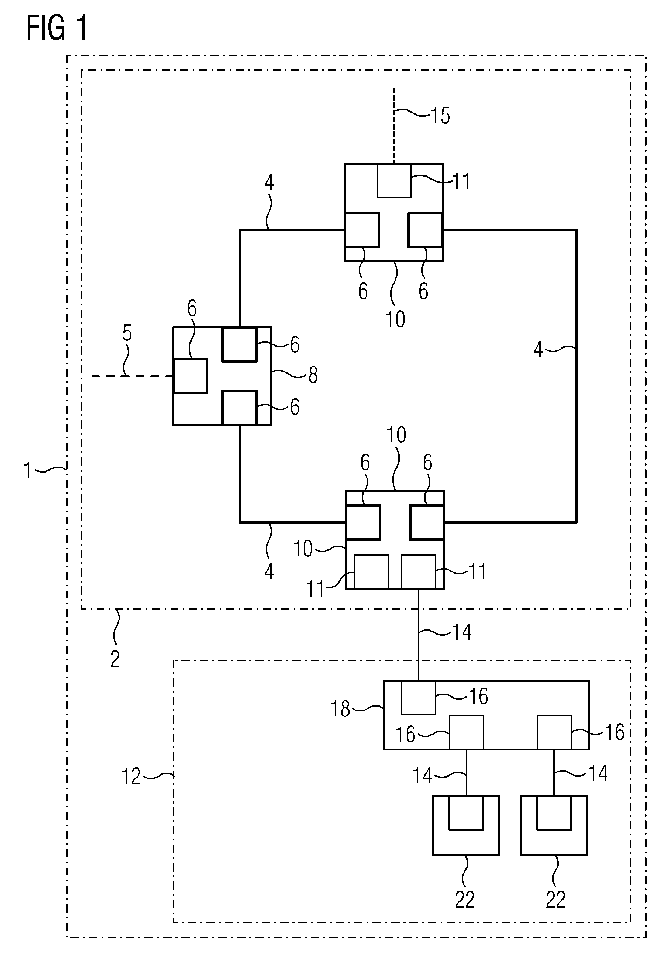

FIG 1 zeigt eine bevorzugte Ausführungsform eines konvergenten Netzwerks 1, das aus einer zentralen Verteilerinfrastruktur 2 und in diesem Fall einer dezentralen Verteilerinfrastruktur 12 besteht. Angedeutet ist mit den möglichen zentralen und dezentralen Netzwerkverbindungen 5 und 15, dass das konvergente Netzwerk 1 in weiteren Ausführungsformen um weitere zentrale und dezentrale Netzwerkverbindungen 4 und 14 sowie die zugehörigen Verteilerinfrastrukturen 2 und 12 erweitert werden kann. In dieser Ausführungsform hat die zentrale Verteilerinfrastruktur 2 eine Ringstruktur und besteht aus zentralen Netzwerkverbindungen 4, Koppelknoten 10, die über die Koppelports 11 die Schnittstelle zwischen zentraler Verteilerinfrastruktur 2 und dezentraler Verteilerinfrastruktur 12 bilden, sowie einem zentralen Netzwerkknoten 8 der als Verteiler innerhalb der zentralen Verteilerinfrastruktur 2 fungiert. Die Ringstruktur kommt dadurch zustande, dass die zentralen Netzwerkknoten 8 und die Koppelknoten 10 jeweils mit ihren Nachbarn über eine zentrale Netzwerkverbindung verbunden sind. Bei Ausfall einer zentralen Netzwerkverbindung können Telegramme die jeweils andere Richtung im Ring wählen. Zentrale Netzwerkverbindungen 4 müssen nicht aus einer einzelnen, physikalischen Netzwerkverbindung bestehen, sondern können durchaus Redundanzen aufweisen. Auch eine kabellose oder sogar virtuelle Realisierung der Netzwerkverbindungen 4 und 14 ist denkbar.

Der untere Koppelknoten 10 ist über einen Koppelport 11, der wiederum eine Art dezentraler Netzwerkport 16 ist, und eine dezentrale Netzwerkverbindung 14 mit dem dezentralen Netzwerkport 16 eines dezentralen Netzwerkverteilers 18 verbunden. Die dezentralen Netzwerkverbindungen 14 müssen nicht aus einer einzelnen, physikalischen Netzwerkverbindung bestehen, sondern können durchaus Redundanzen aufweisen. An den dezentralen Netzwerkverteiler 18 sind in diesem Fall wiederum zwei Netzwerkgeräte 22 gekoppelt. Die Netzwerkgeräte 22 können beispielsweise PCs in der Entwicklungsabteilung oder Produktionsplanung sein. Sie können aber ebenso Industriesteuerungen in der Produktion sein, die Echtzeittelegramme senden und empfangen.

In dieser Ausführungsform wird nun den Echtzeittelegrammen, die an zentralen Netzwerkports 6 der Koppelknoten 10 empfangen werden, ein höheres Prioritätsniveau 30, in dieser Figur nicht gezeigt, als den Echtzeittelegrammen, die an den Koppelports 11 empfangen werden, zugewiesen. Dies hat den Hintergrund, dass die Prioritätsniveaus 30 der Echtzeittelegramme in der dezentralen Verteilerinfrastruktur 12 zwar ausreichend hoch gewählt sein können, beim Übergang in die zentrale Verteilerinfrastruktur 2 aber eine völlig andere Datenlast vorliegt. Senden und/oder empfangen mehrere Dienste Echtzeittelegramme über die zentrale Verteilerinfrastruktur 2, so kann es bei unveränderter Priorität dazu kommen, dass zu viel Zeit vergeht bis ein spezifisches Echtzeittelegramm weitergeleitet wird und somit die Aufgabe der Erfindung, also die effiziente Priorisierung der Echtzeittelegramme, nicht gelöst wird. Durch das Priorisieren der Echtzeittelegramme in der zentralen Verteilerinfrastruktur können so Überkapazitäten vermieden und gleichzeitig eine sehr hohe Zuverlässigkeit erreicht werden.

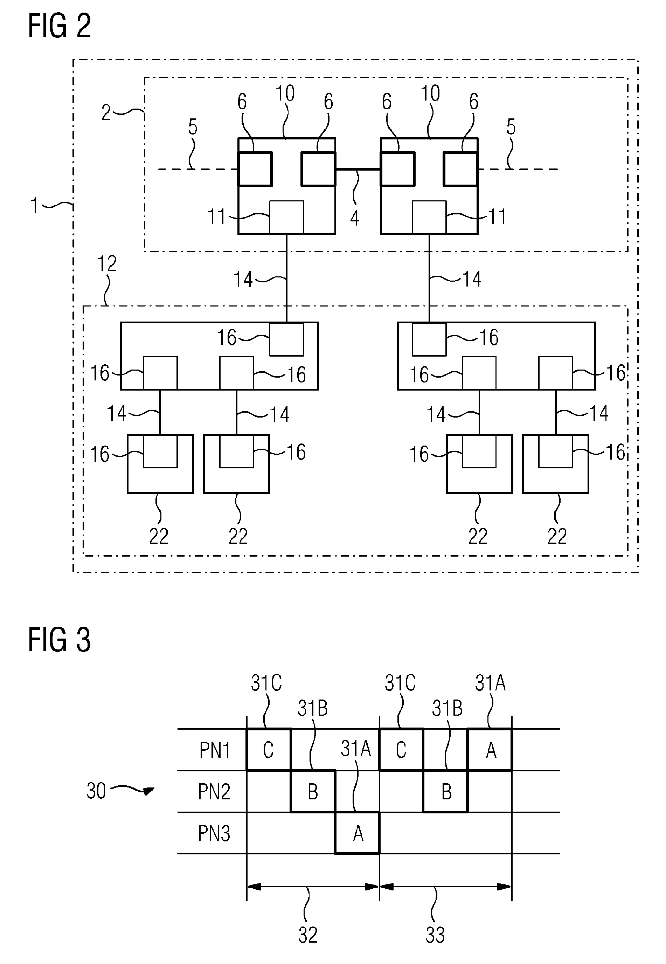

FIG 2 zeigt, unter Verwendung der aus FIG 1 bekannten Bezugszeichen, ein konvergentes Netzwerk 1, das aus einer zentralen Verteilerinfrastruktur 2 und zwei dezentralen Verteilerinfrastrukturen 12 besteht. Die dargestellte Netzwerkstruktur ist auch als sogenannte Kammstruktur bekannt. Auch hier können die zentralen Netzwerkverbindungen 4 Redundanzen aufweisen. Bezüglich der Funktion und der Priorisierung der Echtzeittelegramme wird zur Vermeidung von Wiederholungen auf die Ausführungen zur FIG 1 verwiesen.

FIG 3 zeigt eine schematische und beispielhafte Darstellung des Prioritätsniveaus 30 und den verschiedenen Niveaus, die es abbildet. In diesem Ausführungsbeispiel existieren drei Prioritätsniveaus, das höchste Prioritätsniveau PN1, das mittlere Prioritätsniveau PN2 und das niedrigste Prioritätsniveau PN3. Dargestellt sind die Prioritätsniveaus 30 von Telegrammen 31 der Dienste A, B, C während eines Arbeitstakts 32 und eines Arbeitstakts 33. Im Arbeitstakt 32 ist das Telegramm 31C bereits dem höchsten Prioritätsniveau PN1 zugeordnet. Das Telegramm 31B ist dem mittleren Prioritätsniveau PN2 und das Telegramm 31C dem niedrigsten Prioritätsniveau PN3 zugeordnet. Weiterhin ist zu sehen, dass das Prioritätsniveau 30 des Telegramms 31A von Arbeitstakt 32 auf den darauffolgenden Arbeitstakt 33 angehoben wurde. In diesem Fall könnte Dienst A beispielsweise ein Dienst sein, der Echtzeittelegramme sendet und/oder empfängt und das Telegramm 31A von Arbeitstakt 32 auf Arbeitstakt 33 von einem zentralen Netzwerkport 6 hochpriorisiert worden sein.

Die Erfindung betrifft ein Verfahren zur Priorisierung von Echtzeittelegrammen in einem konvergenten Netzwerk 1, insbesondere in einem industriellen Netzwerk und / oder einem "Time-Sensitive Network" (TSN), wobei das konvergente Netzwerk 1 mindestens eine zentrale Verteilerinfrastruktur 2 und mindestens eine dezentrale Verteilerinfrastruktur 12 aufweist und wobei im konvergenten Netzwerk 1 mindestens ein Dienst Echtzeittelegramme sendet und/oder empfängt, und wobei das konvergente Netzwerk 1 mindestens einen Koppelknoten 10 aufweist, der ein zentraler Netzwerkknoten 8 zur Verbindung von zentraler Verteilerinfrastruktur 2 und dezentraler Verteilerinfrastruktur 12 ist, und der mindestens einen Koppelport 11 aufweist, über den der Koppelknoten 10 mit der dezentralen Verteilerinfrastruktur 12 verbunden wird, wobei der Koppelknoten 10 zentrale Netzwerkports 6 aufweist, über die der Koppelknoten 10 in die zentrale Verteilerinfrastruktur 2 eingebunden ist. Für eine effiziente Priorisierung der Echtzeittelegramme wird vorgeschlagen, dass den Echtzeittelegrammen, die an zentralen Netzwerkports 6 der Koppelknoten 10 empfangen werden, ein höheres Prioritätsniveau 30 zugewiesen wird als den Echtzeittelegrammen die an den Koppelports 11 empfangen werden.

## Patentansprüche

1. Verfahren zur Priorisierung von Echtzeittelegrammen in einem konvergenten Netzwerk (1), insbesondere in einem industriellen Netzwerk, wobei das konvergente Netzwerk (1) mindestens eine zentrale Verteilerinfrastruktur (2) und mindestens eine dezentrale Verteilerinfrastruktur (12) aufweist und wobei im konvergenten Netzwerk (1) mindestens ein Dienst Echtzeittelegramme sendet und/oder empfängt, und wobei das konvergente Netzwerk (1) mindestens einen Koppelknoten (10) aufweist, der ein zentraler Netzwerkknoten (8) zur Verbindung von zentraler Verteilerinfrastruktur (2) und dezentraler Verteilerinfrastruktur (12) ist, und der mindestens einen Koppelport (11) aufweist, über den der Koppelknoten (10) mit der dezentralen Verteilerinfrastruktur (12) verbunden wird, wobei der Koppelknoten (10) zentrale Netzwerkports (6) aufweist, über die der Koppelknoten (10) in die zentrale Verteilerinfrastruktur (2) eingebunden ist, **dadurch gekennzeichnet, dass** den Echtzeittelegrammen, die an den zentralen Netzwerkports (6) der Koppelknoten (10) empfangen werden, ein höheres Prioritätsniveau (30) zugewiesen wird, als den Echtzeittelegrammen, die an den Koppelports (11) empfangen werden.

2. Verfahren nach Anspruch 1, **dadurch gekennzeichnet, dass** den Echtzeittelegrammen, die an den Koppelports (11) empfangen werden, ein niedrigeres Prioritätsniveau (30) zugewiesen wird, als den Echtzeittelegrammen, die an den zentralen Netzwerkports (6) der Koppelknoten (10) empfangen werden.

3. Verfahren nach Anspruch 1 oder 2, **dadurch gekennzeichnet, dass** den Echtzeittelegrammen an weiteren zentralen Netzwerkports (6) ein jeweils höheres Prioritätsniveau (30) zugewiesen wird.

4. Verfahren nach einem der vorhergehenden Ansprüche, **dadurch gekennzeichnet, dass** die Prioritätsniveaus (30) der Echtzeittelegramme dynamisch vergeben werden.

5. Verfahren nach einem der vorhergehenden Ansprüche, **dadurch gekennzeichnet, dass** die Prioritätsniveaus (30) der Echtzeittelegramme lastabhängig vergeben werden.

6. Verfahren nach einem der vorhergehenden Ansprüche, **dadurch gekennzeichnet, dass** die Priorisierung der Echtzeittelegramme durch den jeweils empfangenden Netzwerkport (6, 11, 16) erfolgt.

7. Netzwerkanordnung zur Durchführung eines Verfahrens nach einem der vorhergehenden Ansprüche, **dadurch gekennzeichnet, dass** die Netzwerkanordnung mindestens eine zentrale Verteilerinfrastruktur (2) mit mindestens einem Koppelknoten (10) und mindestens eine dezentrale Verteilerinfrastruktur (12) aufweist.

8. Netzwerkanordnung nach Anspruch 7, **dadurch gekennzeichnet, dass** die zentrale Verteilerinfrastruktur (2) im Wesentlichen eine Ringstruktur aufweist.

9. Netzwerkanordnung nach Anspruch 7 oder 8, **dadurch gekennzeichnet, dass** die zentrale Verteilerinfrastruktur (2) im Wesentlichen eine kammartige Struktur aufweist.

10. Netzwerkanordnung nach Anspruch 8 oder 9, **dadurch gekennzeichnet, dass** die Netzwerkanordnung Teil eines industriellen Automatisierungssystems oder daran koppelbar ist.

11. Netzwerkgerät zur Durchführung eines Verfahrens nach einem der Ansprüche 1 bis 6, wobei das Netzwerkgerät insbesondere als Switch, Hub, Router, Netzwerkadapter oder Netzwerkverteiler ausgebildet ist.
